# EUROPEAN PATENT APPLICATION

(11) **EP 3 490 160 A1**
(43) Date of publication of application: **29.05.2019**
(21) Application number: 17202979.5
(22) Date of filing: 22.11.2017
(51) Int. Cl.: H04B 7/04

(54) **WIRELESS COMMUNICATION DEVICE AND WIRELESS COMMUNICATION METHOD**

(71) Applicant: Vestel Elektronik Sanayi ve Ticaret A.S., 45030 Manisa (TR)
(72) Inventor: TAV, Abdullah, 45030 Manisa (TR); ÖZMEN, Ferhat, 45030 Manisa (TR); AKDEMIR, Onur, 45030 Manisa (TR)
(74) Representative: Ascherl, Andreas

(57) **Abstract**

The present invention provides a wireless communication device (100, 200, 300) for communication with wireless nodes, the wireless communication device (100, 200, 300) comprising at least two movable antennas (101, 102, 201, 202, 301, 302, 315, 316), the two movable antennas (101, 102, 201, 202, 301, 302, 315, 316) being configured to controllably move away from each other and to controllably move to each other, a signal quality sensor (106, 206, 306) configured to measure a signal quality (107, 207, 307) of communication signals (104, 105, 204, 205, 304, 305) that are exchanged between the wireless communication device (100, 200, 300) and the wireless nodes, and a control unit (108, 208, 308) configured to control the at least two movable antennas (101, 102, 201, 202, 301, 302, 315, 316) to move away from each other with decreasing signal quality (107, 207, 307) and to move to each other with increasing signal quality (107, 207, 307). Further, the present invention provides a wireless communication method.

## Description

### TECHNICAL FIELD

The invention relates to wireless communication device. Further, the invention relates to a wireless communication method.

### BACKGROUND

Although applicable to any wireless communication system, the present invention will mainly be described in conjunction with WIFI communication systems.

In modern communication systems, data is often transmitted wirelessly. Wireless data communication requires at least one transmitter and at least one receiver. In each of the two devices an antenna must be provided for transmitting and receiving communication signals.

A communication link between a transmitter and a receiver will have the best transmission or signal quality if a direct line-of-sight is provided between the transmitting antenna and the receiving antenna.

However, especially in urban and indoor environments, there may be no clear line-of-sight (LOS) between the transmitter and receiver. Instead the signal may e.g. be reflected from the transmitter along multiple paths before finally being received by the receiver. Each of these reflections may introduce phase shifts, time delays, attenuations, and distortions that can destructively interfere with one another at the aperture of the receiving antenna.

To reduce the effects that may be caused by such signal paths, antenna diversity may be used. Antenna diversity, also known as space diversity or spatial diversity, is a wireless diversity scheme that uses two or more antennas to improve the quality and reliability of a wireless link. It is especially effective at mitigating the above mentioned multipath situations. Multiple antennas in the receiver offer the receiver several observations of the same signal, wherein each of the antennas will experience a different interference environment. For example, while one antenna may experiencing a deep fade, another antenna may have a sufficient signal. However, in communication devices it may not always be possible to position the different antennas optimally.

Accordingly, there is a need for improving signal quality in wireless communication devices.

### SUMMARY OF THE INVENTION

The present invention provides a wireless communication device with the features of claim 1 and a wireless communication method with the features of claim 10.

Accordingly, it is provided:
A wireless communication device for communication with wireless nodes, the wireless communication device comprising at least two movable antennas, the two movable antennas being configured to controllably move away from each other and to controllably move to each other, a signal quality sensor configured to measure a signal quality of communication signals that are exchanged between the wireless communication device and the wireless nodes, and a control unit configured to control the at least two movable antennas to move away from each other with decreasing signal quality and to move to each other with increasing signal quality.

Further, it is provided:
A wireless communication method for communicating between a wireless communication device and wireless nodes, the wireless communication device comprising at least two movable antennas, the wireless communication method comprising measuring a signal quality of communication signals that are exchanged between the wireless communication device and the wireless nodes, and controlling the at least two movable antennas to move away from each other with decreasing signal quality and to move to each other with increasing signal quality.

The present invention is based on the finding that the distance between two antennas of a communication device influences the diversity that may be achieved with an antenna system.

Usually in communication devices, like e.g. WIFI routers, one or more antennas are positioned at fixed locations inside of the housing of the respective communication device. In communication devices that use antenna diversity to improve the link quality, the fixed positions of the antennas limit the diversity or diversity gain that may be achieved with the antenna system in the communication device.

The present invention therefore now provides a communication device that comprises at least two antennas for making use of the advantages that antenna diversity provides. At the same time, the antennas in the communication device are not provided at fixed positions. Instead, the antennas are controllably movable to move away from each other, i.e. to increase the distance between the antennas, and to move to each other, i.e. to decrease the distance between the antennas.

The antennas may e.g. comprise a rest or starting position. In this starting position, the antennas may e.g. be provided as close together as non-movable antennas in a comparable communication device that does not make use of the present invention. In the starting position, the distance between the antennas may therefore e.g. be the minimum distance.

To effectively control the movement and therefore the distance between the antennas, the signal quality sensor may be provided that measures the signal quality of the communication signals, e.g. the link quality, between the communication device and the wireless nodes. The signal quality sensor may then provide respective quality information to the control unit.

The control unit may then analyze or evaluate the signal quality and control the movable antennas accordingly to move away from each other or to move to each other.

The control unit may e.g. control the movable antennas to move away from each other, when the signal quality decreases. Moving the movable antennas away from each other will increase the distance and therefore the antenna diversity that may be achieved. The distance of movement may e.g. be determined by the amount of decrease of the signal quality. It is understood, that the control unit may also control the movable antennas to move to each other and decrease the distance between the movable antennas, when the signal quality increases. The distance between the antennas may therefore - limited only by the maximum and the minimum distance - be related to or proportional to the measured signal quality.

In addition, it is understood, that with more than two movable antennas, the single antennas may be evenly distributed along the available space.

Further embodiments of the present invention are subject of the further subclaims and of the following description, referring to the drawings.

In an embodiment, the wireless communication device may comprise a movement mechanism, wherein the antennas may be arranged on the movement mechanism and wherein the movement mechanism may be configured to move the at least two movable antennas away from each other and to move the at least two movable antennas to each other based on a control signal. The control signal may be provided by the control unit.

The movement mechanism may comprise any type of support for the movable antennas that allows controllably moving the movable antennas. Such a support may e.g. comprise a kind of pull-out rails, a slide on a guide, or the like, that carry the antennas. Further, the movement mechanism may comprise an active element or actuator that performs the actual movement. Such an actuator may e.g. comprise an electric motor or the like that controllably moves the antennas.

A linear motor may for example be used. The linear motor may at the same time provide a support or carrier for at least one of the antennas. As alternative, a threaded rod may be connected to the rotor of an electric motor and a slide with an inner thread may be provided on the threaded rod. Rotating the rotor of the electric motor in one direction will move the slide away from the electric motor and rotating the rotor into the other direction will move the slide towards the electric motor.

It is understood, that the invention is not limited to the above examples of a movement mechanism and that other movement mechanisms are also possible. For example, a rotary motor may be provided with a lever mechanism that translates a rotation, e.g. a 90° or 180° rotation, into a linear movement of at least one of the movable antennas.

In another embodiment, the movement mechanism may comprise a number, i.e. one or more or a plurality, of pre-loaded springs that are configured to push the movable antennas away from each other, and the movement mechanism may comprise an actuator that may be configured to controllably compress the springs based on the control signal.

The pre-loaded springs constantly push the movable antennas away from each other. This means that without any braking element or control element, the movable antennas will be pushed to the maximum distance away from each other.

To bring the movable antennas together, i.e. into their starting position, and control the position of the movable antennas, an actuator is provided. The actuator compresses the springs based on the control signal. This means that the amount of compression of the springs is determined by the control signal. Nevertheless, the actuator may be configured to maximally compress the springs in a resting or starting state, where no control signal is available. This makes sure that the antennas are retracted or positioned in their starting position when the wireless communication device is turned off.

The control unit may then provide control signals to the actor that cause the actor to move the movable antennas or at least one of the movable antennas. In an embodiment, one of the movable antennas may be fixed and the others, i.e. one or more, may be movable relative to the fixed antenna. In another embodiment, all movable antennas may be movable.

In a further embodiment, the springs may comprise v-shaped springs with two arms that extend from a center point, and the actuator may comprise a linear actuator configured to pull back the v-shaped springs at the respective center point.

The v-shaped springs may e.g. be formed such that they automatically push the two arms outwards from the center point, i.e. the opening angle is increased. Movable antennas may be provided on the ends of the arms, i.e. the ends opposite to the center point. The antennas may be provided on linear moving mechanisms that allow the antennas to move perpendicularly to the center axis of the v-shaped spring. In consequence, the antennas will move away from each other, when the v-shaped spring is decompressed. At the same time the center point of the v-shaped spring will move towards the axis of movement of the movable antennas.

To make the movable antennas move toward each other, the center point of the v-shaped spring has to be moved or pulled away from the axis of movement of the movable antennas. To this end, the actuator may e.g. comprise a linear actuator or a rotary actuator with a lever arrangement or a rotary motor with a threaded spindle and a corresponding slide with an inner thread or the like.

In another embodiment, the movement mechanism may comprise a number, i.e. one or more or a plurality, of pre-loaded springs that are configured to pull the movable antennas together, and the movement mechanism may comprise an actuator that is configured to controllably stretch the springs based on the control signal.

The arrangement with the pre-loaded springs that pull the movable antennas together may be seen as a kind of opposite working principle to the above explained embodiments. Therefore, the above explanations apply mutatis mutandis. For example a pulling movement as described above, will be replaced for a pushing movement, and the like.

In a further embodiment, the movement mechanism may comprise at least one extendable arm and at least one of the antennas may be arranged on the extendable arm.

It is understood, that in a simple arrangement, the movable antennas may be provided on a guide that is installed in the housing of the wireless communication device. However, the maximum distance that the movable antennas may comprise to each other may in such a case be limited by the dimensions of the housing. In addition, usually the antennas will already be positioned at the maximum possible distance in the housing.

To provide for an increased range of movement of the movable antennas, at least one of the movable antennas may be provided on the extendable arm. The extendable arm may be arranged such that in a retracted position, the movable antennas are positioned at the maximum distance to each other within the limits provided by the housing of the wireless communication device.

In an extracted position however, the extendable arm may move the respective movable antennas to positions outside of the housing of the wireless communication device. The range of movement of the extendable arm may be arbitrarily chosen and e.g. be as long as the distance or half the distance between the antennas in the starting position.

The extendable arm may e.g. be combined in one embodiment, with springs that pull the movable antennas together, i.e. to each other. In such an embodiment, the movable antennas may e.g. automatically retract if no power or no control signal is applied to the actuator.

It is understood, that this principle may also be applied to wireless communication devices without a dedicated housing, such as dual antenna configurations on cell phone antenna posts or the like.

In an embodiment, the signal quality sensor may be configured to provide a data rate and/or a RSSI value as a measure of the signal quality.

The data rate and the RSSI, Receive Signal Strength Indicator, both are values that are readily available in wireless communication devices. The data rate may e.g. be calculated or monitored by the control unit by measuring the amount of data that is transmitted or received. The RSSI may e.g. be provided by a wireless chipset in the wireless communication device. Therefore, the signal quality sensor may be provided in or be implemented as part of the control unit or the wireless chipset of the wireless communication device.

In another embodiment, the control unit may be configured to stepwise change the distance between the at least two movable antennas between a minimum distance and a maximum distance in predetermined distance steps, wherein every distance step may correspond to a predetermined interval of a range of the signal quality.

If the distance between the movable antennas is modified stepwise no permanent movement of the movable antennas will be performed and the movement mechanics will be stressed less.

The number of movement steps may be predetermined, e.g. to 5, 10, 15 or the like. The sizes of the single movement steps may be equal, this means that with 10 movement steps, every step is as large as 1/10 of the total range of movement of the movable antennas. It is however understood, that the movement steps may also be different in size. For example, larger movement steps may be provided at the beginning of the movement range, i.e. beginning from the starting position. The movement steps may then become smaller towards the outer limits of the movement range.

In addition, every movement step may correspond to a respective interval of the signal quality. The signal quality may for example be provided as RSSI value with a range from 0% to 100%. With ten movement steps, every interval may be 10% wide. This means, that the control unit will leave the movable antennas in their starting position with a signal quality of 100% to <90%, move the movable antennas the first movement step with a signal quality 90% to <80%, move the movable antennas the second movement step with a signal quality of 80% to <70%, and so on. It can be seen, that with the RSSI the mapping of the movement steps to the signal quality is reciprocal. Whether the mapping is reciprocal or not depends on the nature of the signal quality measurement.

In general the interval size will be the maximum signal quality value minus the minimum signal quality value divided by the number of movement steps, or the minimum signal quality value minus the maximum signal quality value divided by the number of movement steps.

In an embodiment, the control unit may be configured to continually change the distance between the at least two movable antennas between a minimum distance and a maximum distance based on the determined signal quality.

In contrast to the step wise movement of the movable antennas, a continuous or linear movement provides for a smooth transition of the antennas and possibly a constant signal quality.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
Fig. 1 shows a block diagram of an embodiment of a wireless communication device according to the present invention;
Fig. 2 shows a block diagram of another embodiment of a wireless communication device according to the present invention;
Fig. 3 shows a block diagram of another embodiment of a wireless communication device according to the present invention;
Fig. 4 shows a flow diagram of an embodiment of a wireless communication method according to the present invention;
Fig. 5 shows a flow diagram of another embodiment of a wireless communication method according to the present invention.

In the figures like reference signs denote like elements unless stated otherwise.

### DETAILED DESCRIPTION OF THE DRAWINGS

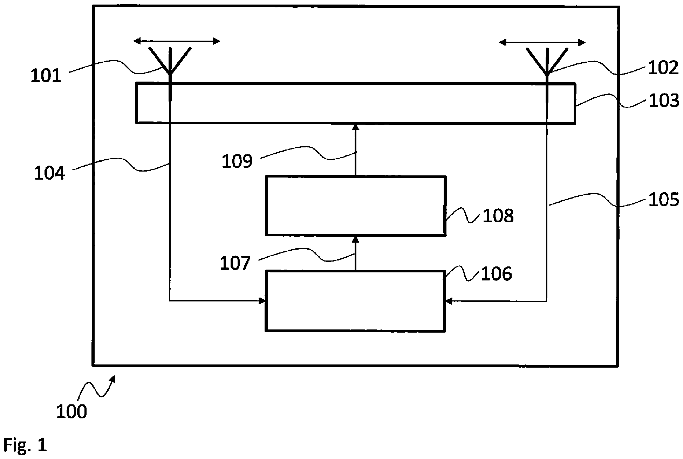

Fig. 1 shows a block diagram of an embodiment of a wireless communication device 100. The wireless communication device 100 comprises two movable antennas 101, 102 for communicating with wireless nodes (not explicitly shown). The movable antennas 101, 102 are arranged on a movement mechanism 103 that allows moving the movable antennas 101, 102 on a common axis away from each other and to each other. It is understood, that the movement mechanism 103 is just exemplarily chosen to have a common axis for both movable antennas 101, 102. In other embodiments, the movement mechanism 103 may also provide different axes for the movable antennas 101, 102.

The movable antennas 101, 102 are both coupled to a signal quality sensor 106. The signal quality sensor 106 is further coupled to a control unit 108 that controls the movement mechanism 103.

The signal quality sensor 106 is coupled to the movable antennas 101, 102 to receive the communication signals 104, 105 for determining the signal quality 107 of the communication signals 104, 105 that are exchanged between the wireless communication device 100 and the wireless nodes. The signal quality sensor 106 may e.g. determine a data rate of data that is communicated via the communication signals 104, 105. In addition or as alternative the signal quality sensor 106 may also determine a RSSI value or any other, e.g. application specific, measure that represents the quality of a communication link between the wireless communication device 100 and other wireless nodes.

The signal quality sensor 106 then provides the measured signal quality 107 to the control unit 108. The control unit 108 then determines a control signal 109 based on the signal quality 107 that is provided to the movement mechanism 103 to position the movable antennas 101, 102 accordingly. Position accordingly may refer to moving the movable antennas 101, 102 away from each other with decreasing signal quality 107 and to moving the movable antennas 101, 102 to each other with increasing signal quality 107.

It is understood, that the control unit 108 may e.g. be or be embedded in the central control unit or processor of the wireless communication device 100. The wireless communication device 100 may e.g. be a WIFI router and the central control unit or processor may be the processor of the WIFI router. It is further understood, that the signal quality sensor 106 may also be embedded at least in part in the control unit 108. In case of the data rate as a measure of the signal quality 107, the data rate may e.g. directly be determined in the control unit 108. In such cases the signal quality sensor 106 may be a function that may be part of a firmware or software that is executed in the control unit 108. If the signal quality 107 is reported e.g. as RSSI, the signal quality sensor 106 may be provided in the wireless chipset of the wireless communication device 100. Such chipsets may provide the RSSI value to the control unit 108 as part of their normal operation or the control unit 108 may request a RSSI value from such chipsets.

Other possible measures for the signal quality 107 may e.g. comprise error rates, packet loss rates, necessary transmission repetitions and the like.

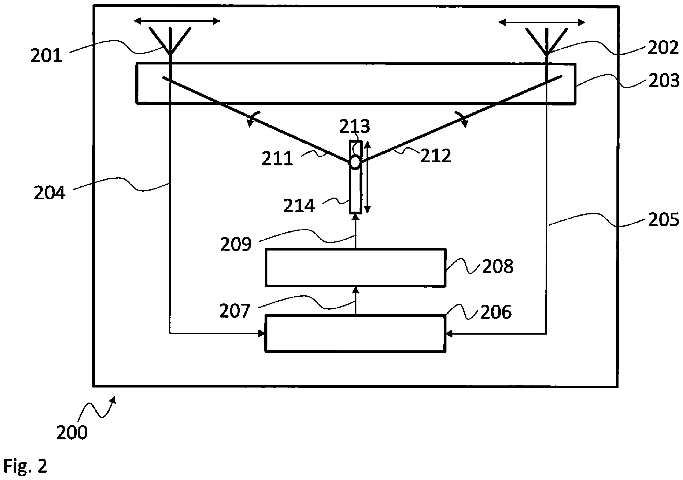

Fig. 2 shows a block diagram of another embodiment of a wireless communication device 200. The wireless communication device 200 is based on the wireless communication device 100 and therefore also comprises two movable antennas 201, 202 that are arranged on a movement mechanism 203 which is controlled by control unit 208 via control signal 209. The control unit 208 determines the control signal 209 based on the signal quality 207 that is reported by the signal quality sensor 206 based on the communication signals 204, 205.

The wireless communication device 200 further comprises a v-shaped spring (not separately referenced) with an actor that in combination with the movement mechanism 203 provides for a linear movement of the movable antennas 201, 202. The movement mechanism 203 may e.g. be a linear rail or guide. The v-shaped spring comprises two arms 211, 212, one for each one of the movable antennas 201, 202. The arms 211, 212 are coupled to each other at the center point 213. The v-shaped spring is preloaded such that the arms 211, 212 push outwards, i.e. they try to open up or enlarge the angle between them. The ends of the arms 211, 212 opposite to the center point 213 are coupled to the antennas such that an opening movement of the arms 211, 212 pushes the movable antennas 201, 202 away from each other.

To allow a controllable movement of the movable antennas 201, 202, the wireless communication device 200 comprises an actor 214 that provides for a controllable linear movement of the center point 213 of the v-shaped spring in an axis that is perpendicular to the movement axis of the movable antennas 201, 202. The actor 214 may e.g. comprise a rotary motor with a threaded rod attached to the rotor and a slide with a respective inner thread that moves on the rod and is coupled to the center point 213. However, it is understood that any other mechanical arrangement may also be provided that allows linearly moving the center point 213.

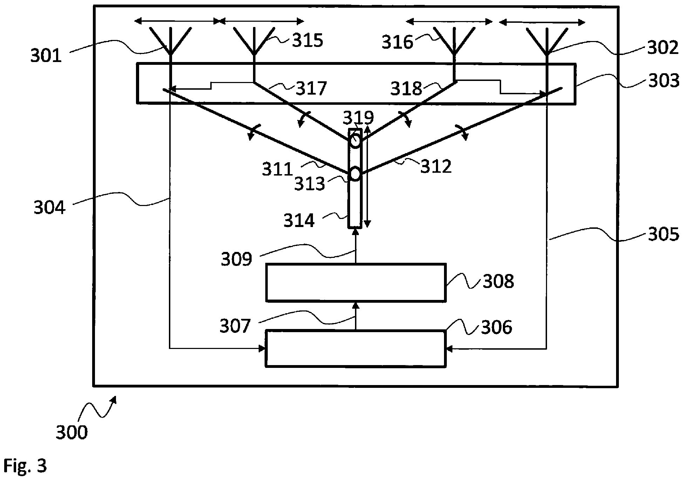

Fig. 3 shows a block diagram of another embodiment of a wireless communication device 300. The wireless communication device 300 is based on the wireless communication device 200 and therefore also comprises two movable antennas 301, 302 that are arranged on a movement mechanism 303 which is controlled by control unit 308 via control signal 309. The control unit 308 determines the control signal 309 based on the signal quality 307 that is reported by the signal quality sensor 306 based on the communication signals 304, 305. The control unit 308 then controls actor 314 based on the control signal 209 that leads to a compression or decompression of the v-shaped spring and therefore a movement of the arms 311, 312.

The wireless communication device 300 in addition to the movable antennas 301 and 302 comprises two more movable antennas 315, 316 that are also arranged on the movement mechanism 303. It is understood, that a separate movement mechanism could be provided for the movable antennas 315, 316 instead. The movable antennas 315, 316 are provided between the movable antennas 301, 302. The movable antennas 301, 302 may be thought of the outer antennas, and the movable antennas 315, 316 may be thought of the inner antennas.

The two movable antennas 315, 316 are also coupled to a v-shaped spring with two arms 317, 318 that are coupled to center point 319. However, the arms are shorter and the center point 319 is therefore closer to the axis of movement of the movable antennas 301, 302 and the movable antennas 315, 316. The actor 314 accordingly is longer than the actor 214 of the wireless communication device 200 and accommodates both center points 314, 319. It is understood that two different or separate actors may also be provided that each move one of the center points 313, 319.

The wireless communication device 300 shows how the principle of the present invention may be applied to wireless communication device 300 with more than two antennas. It is understood, that even more movable antennas may be provided or that a single antenna may be provided in the center between the movable antennas 301, 302 and the movable antennas 315, 316.

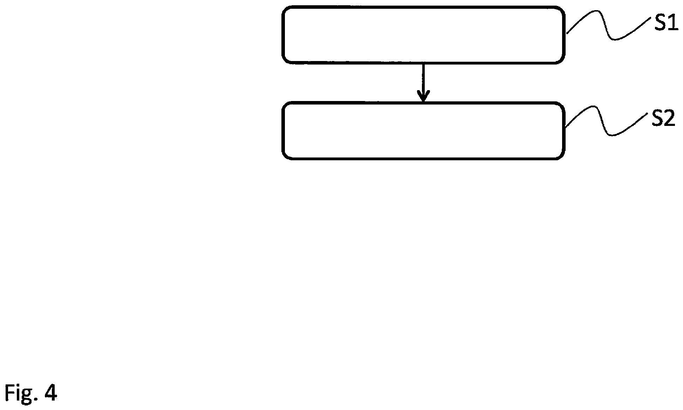

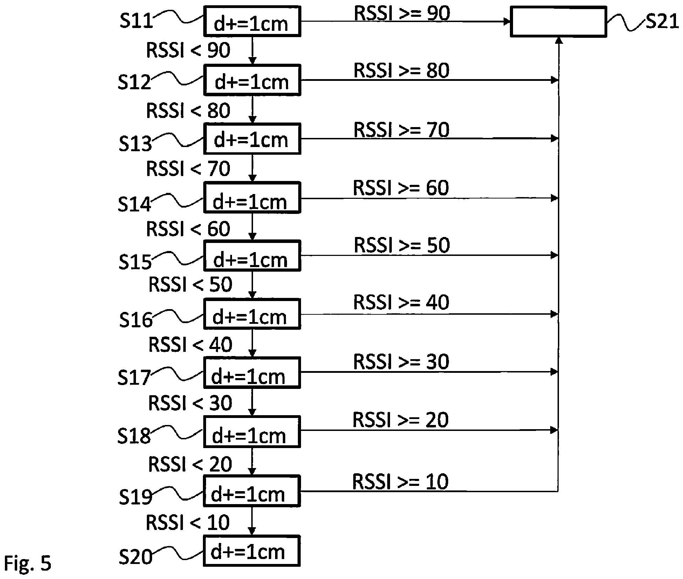

For sake of clarity in the following description of the method based Figs. 4 and 5 the reference signs used above in the description of apparatus based Figs. 1 - 3 will be maintained.

Fig. 4 shows a flow diagram of an embodiment of a wireless communication method for communicating between a wireless communication device 100, 200, 300 and wireless nodes. The wireless communication device 100, 200, 300 may comprise at least two movable antennas 101, 102, 201, 202, 301, 302, 315, 316.

The wireless communication method comprises measuring S1 a signal quality 107, 207, 307 of communication signals 104, 105, 204, 205, 304, 305 that are exchanged between the wireless communication device 100, 200, 300 and the wireless nodes. Further, the wireless communication method comprises controlling the at least two movable antennas 101, 102, 201, 202, 301, 302, 315, 316 to move away from each other with decreasing signal quality 107, 207, 307 and to move to each other with increasing signal quality 107, 207, 307. The signal quality 107, 207, 307 may e.g. be reported as a data rate and/or a RSSI value.

Moving the movable antennas 101, 102, 201, 202, 301, 302, 315, 316 may e.g. be provided with a movement mechanism 103, 203, 303. The movable antennas 101, 102, 201, 202, 301, 302, 315, 316 may e.g. be arranged on the movement mechanism 103, 203, 303 or a part of the movement mechanism 103, 203, 303 and the movement mechanism 103, 203, 303 may move the movable antennas 101, 102, 201, 202, 301, 302, 315, 316 away from each other and to each other based on a control signal 109, 209, 309 that is provided based on the measured signal quality 107,207,307.

Moving may be performed with a number of pre-loaded springs that push the movable antennas 101, 102, 201, 202, 301, 302, 315, 316 away from each other and an actuator 214, 314 that controllably compresses the springs based on the control signal 109, 209, 309. The springs may e.g. comprise v-shaped springs with two arms 211, 212, 311, 312, 317, 318 that extend from a center point 213, 313, 319, and the actuator 214, 314 may comprise a linear actuator 214, 314 that pulls back the v-shaped springs at the respective center point 213, 313, 319 based on the control signal 109, 209, 309. As alternative, the pre-loaded springs may pull the movable antennas 101, 102, 201, 202, 301, 302, 315, 316 together and the actuator 214, 314 may controllably stretch the springs based on the control signal 109, 209, 309.

To provide for an extended range of movement of the movable antennas 101, 102, 201, 202, 301, 302, 315, 316 at least one extendable arm may be provided in the movement mechanism 103, 203, 303 and at least one of the antennas may be arranged on the extendable arm.

The distance between the at least two movable antennas 101, 102, 201, 202, 301, 302, 315, 316 may e.g. be stepwise changed between a minimum distance and a maximum distance in predetermined distance steps. Every distance step may correspond to a predetermined interval of a range of the signal quality 107, 207, 307. As alternative, the distance between the at least two movable antennas 101, 102, 201, 202, 301, 302, 315, 316 may continually be changed between a minimum distance and a maximum distance based on the determined signal quality 107, 207, 307.

Fig. 5 shows a flow diagram of another embodiment of a wireless communication method. The flow diagram of Fig. 5 exemplifies how the distance between the movable antennas 101, 102, 201, 202, 301, 302, 315, 316 may be controlled stepwise. The method of Fig. 5 uses the RSSI value as an indicator for the signal quality 107, 207, 307. It can be seen that the intervals for the signal quality 107, 207, 307 each comprise ten percent or points of the RSSI value. While the RSSI value is constant within one of the intervals, the method rests in step S21.

However, whenever the RSSI changes from one interval to the other interval, the distance between the movable antennas 101, 102, 201, 202, 301, 302, 315, 316 is either reduced or increased by 1 cm, respectively. While in the diagram an increase of the distance is indicated while the RSSI falls, it is understood, that the opposite is also applied, i.e. the distance is reduced with improving RSSI.

The shown values for the RSSI may e.g. be percentages. It is however understood that any other measure may be chosen. It is further understood, that the intervals need not be of the same size and may e.g. progressively be increased or decreased.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

Thus, the present invention provides a wireless communication device 100, 200, 300 for communication with wireless nodes, the wireless communication device 100, 200, 300 comprising at least two movable antennas 101, 102, 201, 202, 301, 302, 315, 316, the two movable antennas 101, 102, 201, 202, 301, 302, 315, 316 being configured to controllably move away from each other and to controllably move to each other, a signal quality sensor 106, 206, 306 configured to measure a signal quality 107, 207, 307 of communication signals 104, 105, 204, 205, 304, 305 that are exchanged between the wireless communication device 100, 200, 300 and the wireless nodes, and a control unit 108, 208, 308 configured to control the at least two movable antennas 101, 102, 201, 202, 301, 302, 315, 316 to move away from each other with decreasing signal quality 107, 207, 307 and to move to each other with increasing signal quality 107, 207, 307. Further, the present invention provides a wireless communication method.

### List of reference signs

- 100, 200, 300: wireless communication device
- 101, 102, 201, 202, 301, 302, 315, 316: movable antenna
- 103, 203, 303: movement mechanism
- 104, 105, 204, 205, 304, 305: communication signal
- 106, 206, 306: signal quality sensor
- 107, 207, 307: signal quality
- 108, 208, 308: control unit
- 109, 209, 309: control signal

- 211, 212, 311, 312, 317, 318: arm
- 213, 313, 319: center point
- 214, 314: actuator

- S1, S2, S11 - S21: method steps

## Claims

1. Wireless communication device (100, 200, 300) for communication with wireless nodes, the wireless communication device (100, 200, 300) comprising:
at least two movable antennas (101, 102, 201, 202, 301, 302, 315, 316), the two movable antennas (101, 102, 201, 202, 301, 302, 315, 316) being configured to controllably move away from each other and to controllably move to each other,
a signal quality sensor (106, 206, 306) configured to measure a signal quality (107, 207, 307) of communication signals (104, 105, 204, 205, 304, 305) that are exchanged between the wireless communication device (100, 200, 300) and the wireless nodes, and
a control unit (108, 208, 308) configured to control the at least two movable antennas (101, 102, 201, 202, 301, 302, 315, 316) to move away from each other with decreasing signal quality (107, 207, 307) and to move to each other with increasing signal quality (107, 207, 307).

2. Wireless communication device (100, 200, 300) according to claim 1, comprising a movement mechanism (103, 203, 303), wherein the antennas are arranged on the movement mechanism (103, 203, 303) and wherein the movement mechanism (103, 203, 303) is configured to move the at least two movable antennas (101, 102, 201, 202, 301, 302, 315, 316) away from each other and to move the at least two movable antennas (101, 102, 201, 202, 301, 302, 315, 316) to each other based on a control signal (109, 209, 309), wherein the control unit (108, 208, 308) is configured to provide the control signal (109, 209, 309).

3. Wireless communication device (100, 200, 300) according to claim 2, wherein the movement mechanism (103, 203, 303) comprises a number of pre-loaded springs that are configured to push the movable antennas (101, 102, 201, 202, 301, 302, 315, 316) away from each other, and wherein the movement mechanism (103, 203, 303) comprises an actuator (214, 314) that is configured to controllably compress the springs based on the control signal (109, 209, 309).

4. Wireless communication device (100, 200, 300) according to claim 3, wherein the springs comprise v-shaped springs with two arms (211, 212, 311, 312, 317, 318) that extend from a center point (213, 313, 319), and wherein the actuator (214, 314) comprises a linear actuator (214, 314) configured to pull back the v-shaped springs at the respective center point (213, 313, 319).

5. Wireless communication device (100, 200, 300) according to claim 2, wherein the movement mechanism (103, 203, 303) comprises a number of pre-loaded springs that are configured to pull the movable antennas (101, 102, 201, 202, 301, 302, 315, 316) together, and wherein the movement mechanism (103, 203, 303) comprises an actuator (214, 314) that is configured to controllably stretch the springs based on the control signal (109, 209, 309).

6. Wireless communication device (100, 200, 300) according to any one of claims 2 to 5, wherein the movement mechanism (103, 203, 303) comprises at least one extendable arm and wherein at least one of the antennas is arranged on the extendable arm.

7. Wireless communication device (100, 200, 300) according to any one of the preceding claims, wherein the signal quality sensor (106, 206, 306) is configured to provide a data rate and/or a RSSI value as a measure of the signal quality (107, 207, 307).

8. Wireless communication device (100, 200, 300) according to any one of the preceding claims, wherein the control unit (108, 208, 308) is configured to stepwise change the distance between the at least two movable antennas (101,102, 201, 202, 301, 302, 315, 316) between a minimum distance and a maximum distance in predetermined distance steps, wherein every distance step corresponds to a predetermined interval of a range of the signal quality (107, 207, 307).

9. Wireless communication device (100, 200, 300) according to any one of the preceding claims 1 to 7, wherein the control unit (108, 208, 308) is configured to continually change the distance between the at least two movable antennas (101, 102, 201, 202, 301, 302, 315, 316) between a minimum distance and a maximum distance based on the determined signal quality (107, 207, 307).

10. Wireless communication method for communicating between a wireless communication device (100, 200, 300) and wireless nodes, the wireless communication device (100, 200, 300) comprising at least two movable antennas (101, 102, 201, 202, 301, 302, 315, 316), the wireless communication method comprising:
measuring a signal quality (107, 207, 307) of communication signals (104, 105, 204, 205, 304, 305) that are exchanged between the wireless communication device (100, 200, 300) and the wireless nodes, and
controlling the at least two movable antennas (101, 102, 201, 202, 301, 302, 315, 316) to move away from each other with decreasing signal quality (107, 207, 307) and to move to each other with increasing signal quality (107, 207, 307).

11. Wireless communication method according to claim 10, comprising moving the movable antennas (101, 102, 201, 202, 301, 302, 315, 316) with a movement mechanism (103, 203, 303), wherein the antennas are arranged on the movement mechanism (103, 203, 303) and wherein the movement mechanism (103, 203, 303) moves the at least two movable antennas (101, 102, 201, 202, 301, 302, 315, 316) away from each other and to each other based on a control signal (109, 209, 309) that is provided based on the measured signal quality (107, 207, 307).

12. Wireless communication method according to claim 11, wherein a number of pre-loaded springs that push the movable antennas (101, 102, 201, 202, 301, 302, 315, 316) away from each other are provided in the movement mechanism (103, 203, 303), and wherein an actuator (214, 314) controllably compresses the springs based on the control signal (109, 209, 309), especially wherein the springs comprise v-shaped springs with two arms (211, 212, 311, 312, 317, 318) that extend from a center point (213, 313, 319), and wherein the actuator (214, 314) comprises a linear actuator (214, 314) that pulls back the v-shaped springs at the respective center point (213, 313, 319) based on the control signal (109, 209, 309); and/or
wherein a number of pre-loaded springs that pull the movable antennas (101, 102, 201, 202, 301, 302, 315, 316) together are provided in the movement mechanism (103, 203, 303), and wherein an actuator (214, 314) controllably stretches the springs based on the control signal (109, 209, 309).

13. Wireless communication method according to any one of claims 11 and 12, wherein at least one extendable arm is provided in the movement mechanism (103, 203, 303) and wherein at least one of the antennas is arranged on the extendable arm.

14. Wireless communication method according to any one of the preceding claims 10 to 13, wherein the signal quality (107, 207, 307) is reported as a data rate and/or a RSSI value.

15. Wireless communication method according to any one of the preceding claims 10 to 14, wherein the distance between the at least two movable antennas (101, 102, 201, 202, 301, 302, 315, 316) is stepwise changed between a minimum distance and a maximum distance in predetermined distance steps, wherein every distance step corresponds to a predetermined interval of a range of the signal quality (107, 207, 307); or
wherein the distance between the at least two movable antennas (101, 102, 201, 202, 301, 302, 315, 316) is continually changed between a minimum distance and a maximum distance based on the determined signal quality (107, 207, 307).
